# EUROPEAN PATENT APPLICATION

(11) **EP 4 324 748 A1**
(43) Date of publication of application: **21.02.2024**
(21) Application number: 22275110.9
(22) Date of filing: 15.08.2022
(51) Int. Cl.: B64D 39/06, B64D 47/02

(54) **COMMUNICATION SYSTEM FOR AIR-TO-AIR REFUELING**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A fuel delivery device for air-to-air refuelling, the device comprising: a fuel outlet; and an optical transceiver, wherein the optical transceiver is configured to: illuminate the fuel delivery device to provide visual indication to an aircraft receiving fuel; and, transmit and receive data via optical wireless communication to the aircraft receiving fuel from the fuel delivery device.

## Description

### FIELD

The present invention relates to a communication system for air-to-air refuelling between aircraft. In particular, the invention relates to a fuel delivery device, a fuel receiving device, an associated system for communication between two aircraft during air-to-air refuelling operations and a related method.

### BACKGROUND

Air-to-air refuelling is a known method of refuelling aircraft in flight in order to extend their range and/or endurance. Typically, a tanker aircraft, herein a first aircraft, will meet mid-air with a second aircraft requiring refuelling in order to transfer fuel between the aircraft. The first aircraft tends to be a large airline-sized aircraft, for example a Boeing^{™} KC-135 or Airbus^{™} A330 MRTT, which have fuel tanks and specialist fuel delivery devices for transferring fuel to other aircraft in flight. Such fuel delivery devices tend to be of two known types, *"probe and drogue"* and *"flying boom".* In a typical air-to-air refuelling sequence, the first aircraft and the second aircraft may establish communications via radiotelephony and fly in close formation before the fuel delivery device of the first aircraft engages with a cooperative fuel receiving device on the second aircraft, whereupon fuel transfer takes place from the first to the second aircraft.

The development of aircraft, in particular military aircraft, has led to the inclusion of sensors which collect vast amounts of data, for example visual imagery, signals intelligence. This data is transmitted to other aircraft, (e.g. intelligence, surveillance, target acquisition and reconnaissance (ISTAR) platforms, Airborne Early Warning and Control (AWACS) platforms) or alternatively, transmitted back to ground stations (e.g. via known radio frequency (RF) links such as Link 16) for further analysis. There is also a desire to expand the role of first aircraft beyond their refuelling duties to include ISTAR command & control duties by incorporating mission suites capable of utilising the received data in the first aircraft itself rather than in separate dedicated ISTAR aircraft. As such, there is a need for the second aircraft to communicate data to the first aircraft whilst simultaneously receiving fuel from the first aircraft.

### SUMMARY

According to a first aspect of the present invention, there is provided a fuel delivery device for air-to-air refuelling, the device comprising: a fuel outlet; and an optical transceiver, wherein the optical transceiver is configured to: illuminate the fuel delivery device to provide visual indication to an aircraft receiving fuel; and transmit and receive data via optical wireless communication to the aircraft receiving fuel from the fuel delivery device. Preferably, the optical transceiver is a Li-Fi device. Alternatively the optical transceiver is a laser. More preferably the optical transceiver is an LED Li-fi device.

Advantageously, such an arrangement allows the fuel delivery device to transfer fuel from a first aircraft to the aircraft receiving fuel (herein the 'second aircraft') whilst simultaneously allowing data transfer to take place between both aircraft without the risk of sparking.

Optionally, the fuel delivery device is a drogue comprising a frustoconical guide portion; wherein the frustoconical guide portion comprises a first end and a second end; and wherein the second end has a greater diameter than the first end; and wherein the fuel outlet is located at the first end of the frustoconical guide portion.

In this arrangement, the fuel delivery device is a drogue towed behind the first aircraft. The term frustoconical may be defined as the shape of a frustum of a cone having two ends wherein the diameter progressively increases from the first end to the second end. The fuel outlet may be located coaxial with the frustoconical guide portion or may be slightly offset from the axis of the frustoconical guide portion. Advantageously, the frustoconical guide portion provides aerodynamic stability of the fuel delivery device to prevent the device from flailing in the turbulence caused by the first aircraft. Also, the frustoconical guide portion acts as a guide for a cooperative fuel receiving device on a second aircraft e.g. a probe, such that the probe is suitably guided into the fuel outlet of the fuel receiving device.

Optionally, the optical transceiver is located at the first end of the frustoconical guide portion. The optical transceiver may be offset from the fuel outlet. Such an arrangement tends to enable the operator of the second aircraft to locate the fuel outlet more accurately.

The optical transceiver may be located at the second end of the frustoconical guide portion. Such an arrangement means that wider fields of view between a second aircraft and the optical transceiver of the first aircraft may be achieved.

The fuel delivery device may comprise a plurality of optical transceivers, wherein the plurality of optical transceivers are distributed around a circumference of the second end of the frustoconical guide portion. Advantageously, the provision of two or more optical transceivers allow for two or more data channels to simultaneously transmit and received data.

Optionally, the optical transceiver(s) is configured to transmit and receive data wirelessly via electromagnetic waves in the visible light spectrum. Advantageously, this allows the fuel delivery device to be more readily spotted by a second aircraft in flight and allows for high rates of data transfer by the optical transceiver.

The wavelength in the visible light spectrum may be in the range of from 600nm to 800nm. Illumination of the fuel delivery device with a wavelength in the range of from 600nm to 800nm (i.e. red light) tends to preserve night vision of an operator of the second aircraft and is particularly advantageous when the operator of the second aircraft is using night vision goggles (NVG's) when conducting air-to-air refuelling during night time operations.

Optionally, the optical transceiver is configured to transmit and receive data wirelessly via electromagnetic waves in the IR spectrum. Illumination of the fuel delivery device and transmission of data in the IR spectrum tends to result in a more covert refuelling operation. Furthermore, illumination of the fuel delivery device using IR light tends to enable better visibility of the fuel delivery device to the operator of the second aircraft when using night vision goggles.

The optical transceiver may be configured to alternate between the visible light spectrum and IR spectrum when transmitting and receiving electromagnetic waves. Advantageously, such an arrangement allows the same first transceiver to dynamically adapt to a changing environment.

Optionally, the optical transceiver is configured to transmit and receive data using frequency-division multiplexing and/or time-division multiplexing. This allows multiple data streams to be transmitted and received by a single optical transceiver and/or higher data transfer rates to be achieved.

Data transfer may be initiated by physical connection between the fuel delivery device and the second aircraft.

According to a second aspect, there is provided a fuel receiving device for air-to-air refuelling, the device comprising: a fuel inlet; and an optical transceiver; wherein the optical transceiver is configured to transmit and receive data via optical wireless communication to an aircraft delivering fuel to the fuel inlet.

The fuel receiving device may be in the form of a probe. Probe fuel receiving devices are used cooperatively with drogue fuel delivery devices.

Alternatively the fuel receiving device may be in the form of a port located on an aircraft surface. Port fuel receiving devices are used cooperatively with flying boom fuel delivery devices.

Optionally, there is provided a plurality of optical transceivers. Advantageously, this allows for two or more data channels to simultaneously transmit and received data.

The optical transceiver(s) may be configured to transmit and receive data wirelessly via electromagnetic waves in the visible light spectrum, thus allowing for high rates of data transfer by the optical transceiver.

The wavelength in the visible light spectrum may be in the range of from 600nm to 800nm. Illumination of the fuel receiving device with a wavelength in the range of from 600nm to 800nm (i.e. red light) tends to preserve night vision of an operator of the second aircraft and is particularly advantageous when the operator of the second aircraft is using night vision goggles (NVG's) when conducting air-to-air refuelling during night time operations

The optical transceiver(s) may be configured to transmit and receive data wirelessly via electromagnetic waves in the IR spectrum. Illumination of the fuel receiving device and transmission of data in the IR spectrum tends to result in a more covert refuelling operation.

The optical transceiver may be configured to alternate between the visible light spectrum and IR spectrum when transmitting and receiving electromagnetic waves. Advantageously, such an arrangement allows the transceiver to dynamically adapt to a changing environment.

The optical transceiver may be configured to transmit and receive data using frequency-division multiplexing and/or time-division multiplexing. Advantageously, such an arrangement allows multiple data streams to be transmitted and received by a single optical transceiver and/or higher data transfer rates to be achieved

According to a third aspect, there is provided an aircraft comprising the fuel delivery device of the first aspect and/or the fuel receiving device of the second aspect.

According to a fourth aspect, there is provided an aircraft communication system for air-to-air refuelling comprising: a fuel delivery device according to the first aspect comprising a first optical transceiver; and a fuel receiving device according to the second aspect comprising a second optical transceiver; wherein the first optical transceiver is configured to transmit and receive data to and from the second optical transceiver so as to provide optical wireless communication between a first and second aircraft during air-to-air refuelling.

According to a fifth aspect, there is provided a method of communicating between a first and second aircraft during air-to-air refuelling comprising the steps of:
(i) providing a fuel delivery device according to the first aspect;
(ii) providing a fuel receiving device according to the second aspect;
(iii) illuminating the fuel delivery device using the first optical transceiver in order to provide a visual indication to a second aircraft;
(iv) coupling a fuel delivery device of a first aircraft to the fuel receiving device of a second aircraft in flight, wherein the fuel delivery device comprises a first optical transceiver and the fuel receiving device comprises a second optical transceiver; and,
(v) communicating wirelessly between the first and second aircraft via the first optical transceiver of the fuel delivery device and the second optical transceiver of the fuel receiving device.

According to sixth aspect of the present invention, there is provided a fuel delivery device for air-to-air refuelling, the device comprising: a fuel outlet; and an optical transceiver, wherein the optical transceiver is configured to: illuminate the fuel delivery device; and, transmit and receive data via optical wireless communication.

### BRIEF DESCRIPTION OF THE FIGURES

Embodiments of the invention will now be described by way of example only with reference to the figures, in which:
Figure 1 shows a perspective view of a first aircraft refuelling a second aircraft via a drogue and probe arrangement;
Figure 2 shows a cutaway drawing of a drogue fuel delivery device;
Figure 3 shows a perspective view of one arrangement of a drogue fuel delivery device;
Figure 4 shows an alternative perspective view of a second arrangement of a drogue fuel delivery device;
Figure 5 shows an alternative perspective view of a third arrangement of a drogue fuel delivery device;
Figure 6 shows an example arrangement of a drogue fuel delivery device in connection with a probe fuel receiving device;
Figure 7 shows an alternative perspective view of a first aircraft refuelling a second aircraft via a flying boom arrangement; and
Figure 8 shows a method flowchart of communicating between a first and second aircraft.

### DETAILED DESCRIPTION

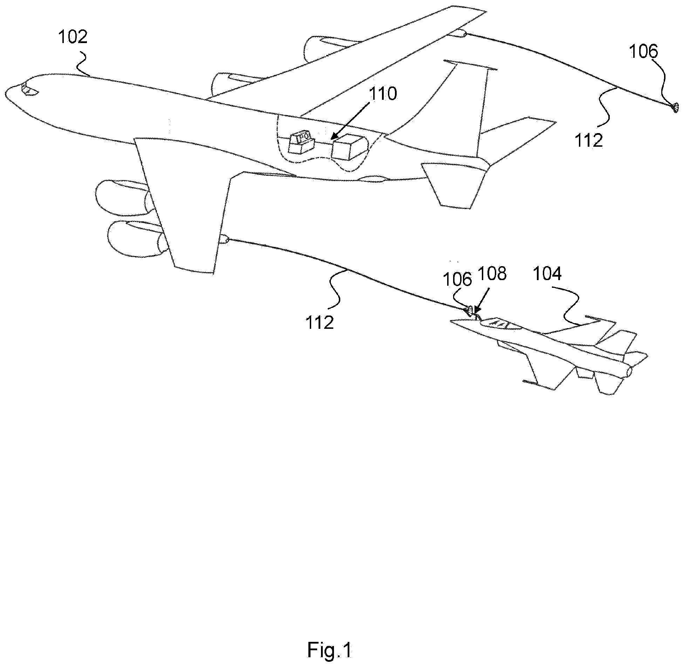

Figure 1 shows a perspective view of a first aircraft 102 refuelling a second aircraft 104. In this arrangement, the first aircraft 102 comprises a fuel delivery device 106 in the form of a drogue and the second aircraft 104 comprises a fuel receiving device 108 in the form of a probe. In this arrangement, the first aircraft 102 is a large airliner style tanker aircraft such as an Airbus^{™} A330MRTT or Boeing^{™} KC135 and comprises two trailing drogues 106 extending from the wings of the first aircraft 102. The trailing drogue 106 may alternatively be mounted on the underside of a first aircraft 102 fuselage. Such drogue fuel delivery devices are well known, for example the Variable Drag Drogue (VDD) manufactured by Cobham Mission Systems^{™}. The drogue 106 comprises a frustoconical guide portion (not shown), i.e. a frustum of a cone, commonly referred to as a 'basket'. In use, the frustoconical guide portion provides two important functions for air-to-air refuelling. Firstly, the frustoconical guide portion provides aerodynamic stability of the fuel delivery device to prevent the device from flailing in the turbulence caused by the first aircraft 102. Secondly, the frustoconical guide portion acts as a guide for a cooperative fuel receiving device on a second aircraft 104 e.g. a probe, such that the probe is suitably guided into the fuel outlet of the fuel receiving device. The drogue may be connected to the first aircraft 102 by a hose 112. In use, the hose provides a means of tethering the drogue 106 to the first aircraft 102 and is used to transfer fuel from the first aircraft 102 internal fuel tanks to the drogue itself.

During an air-to-air refuelling scenario, the first aircraft 102 will generally fly in a steady predictable manner whist the second aircraft 104 trails the first aircraft 102 in formation. Once ready to take on fuel, the second aircraft 104 approaches the first aircraft 102 and flies the probe 108 into the frustoconical guide portion or 'basket' of the drogue fuel delivery device 106 whereupon a mechanical lock couples both the fuel delivery device 106 and fuel receiving device 108 together. The first aircraft 102 then controls the delivery of fuel from the first aircraft 102 to the second aircraft 104 through the connection.

In this arrangement, the first aircraft 102 also comprises a mission suite 110 located within the fuselage of the first aircraft 102. The mission suite may be configured to carry out, for example, command and control (C2) tasks and/or ISTAR tasks. Therefore, the first aircraft 102 performs two roles, that of an air-to-air refuelling platform and that of an airborne command platform. Alternatively, the first aircraft 102 may comprise a manned or unmanned communications suite which is able to transmit received data from the second aircraft to a remote air or land based command centre.

In this arrangement, the second aircraft 104 is a fighter jet aircraft which has associated data which is required to be transmitted to the first aircraft 102. For example, the second aircraft 104 may have data collected during a mission from on-board sensors. This data may be required to be analysed by the mission suite 110 located in the first aircraft 102. Traditionally, such data may be transmitted by RF means such as Link 16 however transmission of the data via RF means may be denied, degraded or compromised by adversarial systems such as jammers and/or eavesdropper systems. In emission control (EMCON) situations, little or no RF communication may take place between the first aircraft and second aircraft. Furthermore, near field RF communication between the two aircraft at the point of refuelling, e.g. on the fuel delivery device 106 or fuel receiving device 108, is highly undesirable due to the risk of sparking in the presence of fuel.

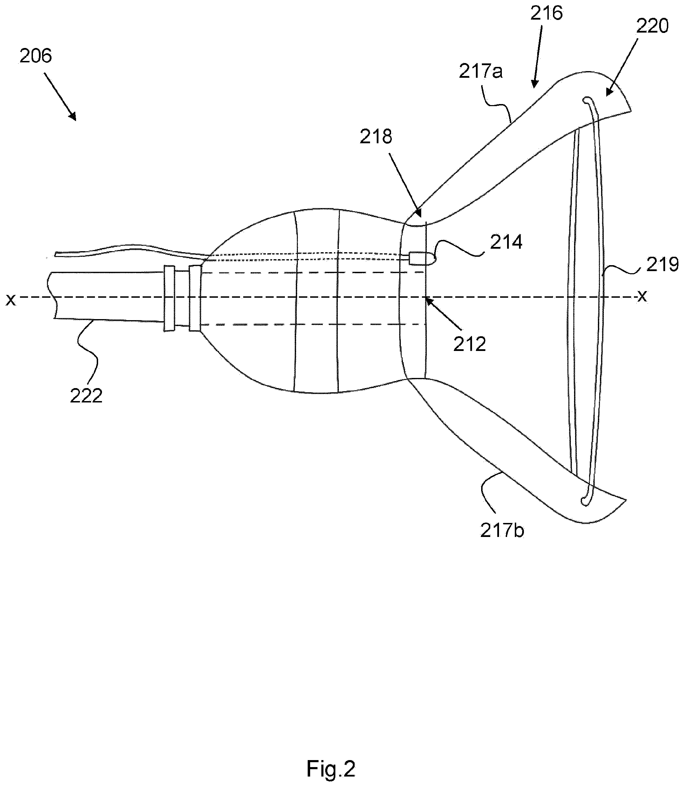

Figure 2 shows an example of a fuel delivery device 206 according to the present invention. In this example, the fuel delivery device 206 is a drogue comprising: a fuel outlet 212; and an optical transceiver 214; wherein the optical transceiver 214 is configured to illuminate the fuel delivery device to provide visual indication to the second aircraft (not shown); and, wherein the optical transceiver 214 is configured to transmit and receive data, via optical wireless communication, to the second aircraft from the fuel delivery device 206.

The drogue 206 comprises a frustoconical guide portion 216 which provides aerodynamic stability for the fuel delivery device 206 and also acts as a guide for a fuel receiving device (not shown) to be guided towards the fuel outlet 212. The frustoconical guide portion 216 comprises a first end 218 and a second end 220; wherein the outermost circumference of the second end 220 has a greater diameter than the outermost circumference of the first end 218. In use, the first end 218 is proximal to the nose of the first aircraft, that is to say, towards the leading edge of the fuel delivery device 206 and the second end 220 of the frustoconical guide portion 216 is proximal to the tail of the first aircraft, that is to say the trailing end of the fuel delivery device 206. The frustoconical guide portion 216 is substantially cone shaped and comprises a hollow inner portion; i.e. the frustoconical guide portion is the surface of a frustum of a cone having open first and second ends. This allows a fuel receiving device, for example a probe, to enter the second end of the guide and connect with the fuel outlet. The frustoconical guide portion may comprise a plurality of fingers 217a, 217b which extend from the first end 218 to the second end 220 in a cone arrangement. The fingers may be retained in the cone shape by a retaining ring 219 which maintains adequate circumferential spacing between the fingers 217a and 217b. Such an arrangement of fingers and retaining ring is common with drogues and the invention is not intended to be limited in this regard.

The fuel outlet 212 is located at the first end 218 of the frustoconical guide portion. The fuel outlet 212 may be substantially coaxial with the frustoconical guide portion 216 as indicated by axis X (as shown) or may be offset from the axis X (not shown). The fuel outlet 212 may comprise a shut off valve (not shown), a mechanical lock for engaging with a fuel receiving device (not shown) or a sensor for detecting contact with a fuel receiving device (not shown). Again, such arrangement of components is common with drogue fuel delivery devices and the invention is not intended to be limited in this regard.

The fuel outlet 212 is connected to a hose 222. The hose 222 connects the fuel delivery device 206 to the first aircraft (not shown). The hose acts both as a tether for the drogue 206 to the first aircraft and as a means to transfer fuel from the internal fuel tanks of the first aircraft to the fuel outlet 212.

The optical transceiver 214 is an optical device which is configured to both transmit optical signals and receive optical signals such that data may be transmitted and received through the optical transceiver 214 simultaneously. The optical transceiver 214 may be analogue or digital. The optical transceiver 214 may comprise a modulator (not shown) in order to modulate optical signals to allow transmission of data. By modulating the light emitted by the optical transceiver 214, data may be encoded into the emitted light signal. The optical transceiver 214 may be a Li-Fi device. The optical transceiver 214 may be a light emitting diode (LED). Alternatively, the optical transceiver 214 may be a laser. Preferably, the optical transceiver 214 is a LED Li-Fi device.

In use, the optical transceiver 214 provides two functions. Firstly, the optical transceiver 214 is configured to illuminate the fuel delivery device 206 such that the fuel delivery device 206 may be seen by an operator of the second aircraft 104. Illumination of the fuel delivery device 206 allows the operator of a second aircraft 104 to see the 'target' into which they must fly the fuel receiving device 108 so as to receive fuel. Secondly, the optical transceiver 214 provides a secure means of data transfer between the first aircraft 102 and second aircraft 104 during air-to-air refuelling operations. Advantageously, communication by optical signals at close range using an optical transceiver 214 is immune to RF detection and/or jamming and suitable for EMCON scenarios. The communication by optical signals at close range using an optical transceiver 214 is also almost impervious to eavesdropping by an adversary. Furthermore, advantageously such a mode of communication eliminates the risk of sparking near a fuel source. In an alternative arrangement, the second aircraft 104 may be an unmanned aerial vehicle which comprises a light sensor for detecting the fuel delivery device. In such an arrangement, illumination of the fuel delivery device 206 by the optical transceiver 214 may allow the light sensor of the second aircraft 104 to identify the fuel delivery device 206 and issue control commands to the UAV to connect with the fuel delivery device.

The present inventors have found that the present invention is an improvement upon traditional free space optical communication between nearby aircraft, e.g. aircraft flying in formation, as such communication relies on extreme directional accuracy on the part of the first aircraft 102 to ensure a transmitted light beam remains focussed on a receiver on the second aircraft 104. Such an arrangement requires a complex gimbal system to ensure precise directional alignment between optical transmitters and receivers in a free space optical system and results in low bandwidth communication due to frequent misalignment of the beams and environmental interference e.g. haze, clouds.

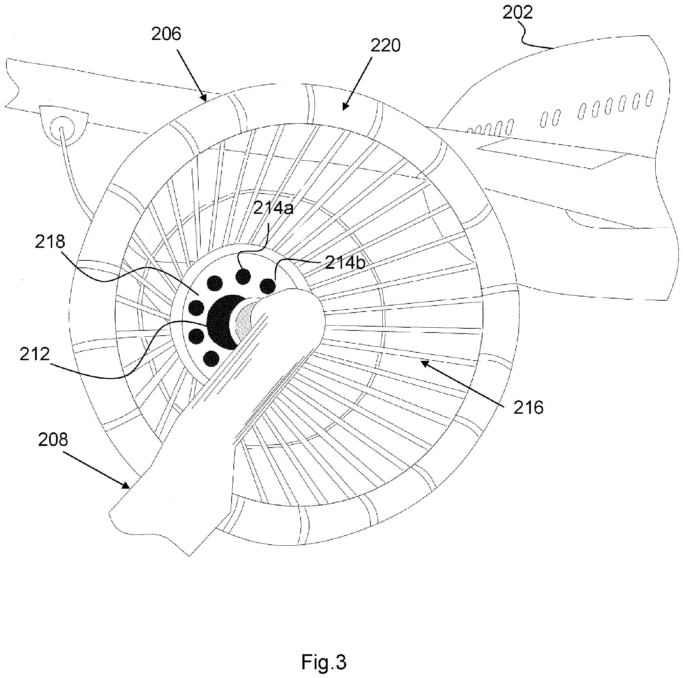

Figure 3 shows a perspective view of the fuel delivery device 206 from the viewpoint of an operator of the second aircraft (not shown). Figure 3 shows the optical transceiver 214 arranged at the first end of the frustoconical guide portion 216 adjacent the fuel outlet 212. Advantageously, such an arrangement tends to enable the operator of the second aircraft 104 to locate the fuel outlet 212 more accurately as the optical transceiver 214 is located immediately adjacent the fuel outlet 212. Furthermore, by providing the optical transceiver 212 in such an arrangement, advantageously the angular field of view of the optical transceiver 214 is limited by the frustoconical guide portion 216 such that visual detection of the fuel delivery device 206 by an adversary is reduced. This is especially useful during night time operations where the first aircraft 102 may not have any external lights switched on (e.g. strobe lights and/or navigation lights) in order to avoid visual detection by an adversary. In this arrangement, there are a plurality of optical transceivers, two examples of which are shown as 214a and 214b, located at the first end 218 of the frustoconical guide portion 216. The plurality of optical transceivers 214a 214b are proximal to the fuel outlet 212 and arranged in a ring around the fuel outlet 212, in other words surrounding the fuel outlet 212. The plurality of optical transceivers 214a 214b may allow two or more data channels to simultaneously transmit and receive data between the first and second aircraft.

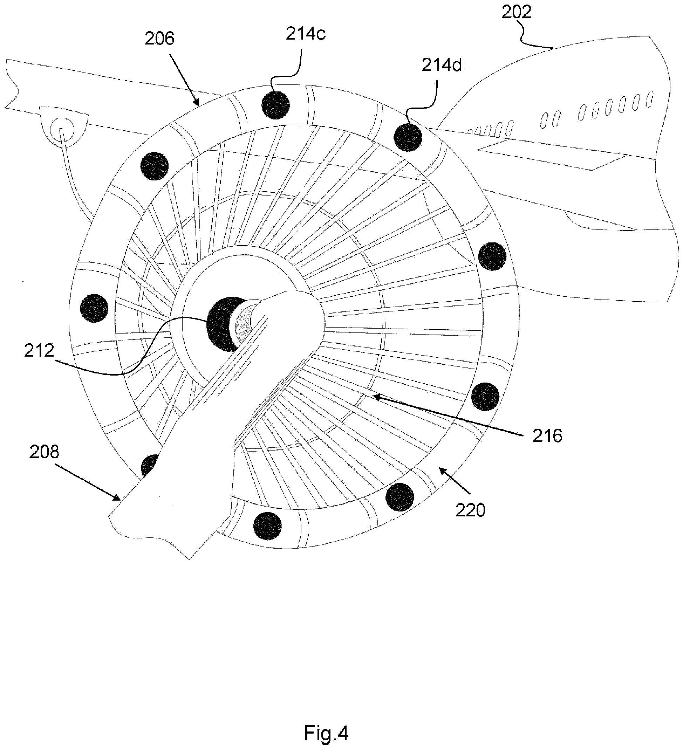

Figure 4 shows an alternative arrangement to Figure 3 wherein the optical transceiver 214 is arranged at the second end 220 of the frustoconical guide portion 216. In this arrangement, wider fields of view between the second aircraft (not shown) and the optical transceiver 214 of the first aircraft 202 may be achieved. Figure 4 shows a plurality of optical transceivers, two examples of which are shown as 214c and 214d, distributed on the circumference of the second end 220 of the frustoconical guide portion 216. The plurality of optical transceivers 214c 214d may allow two or more data channels to simultaneously transmit and receive data between the first and second aircraft.

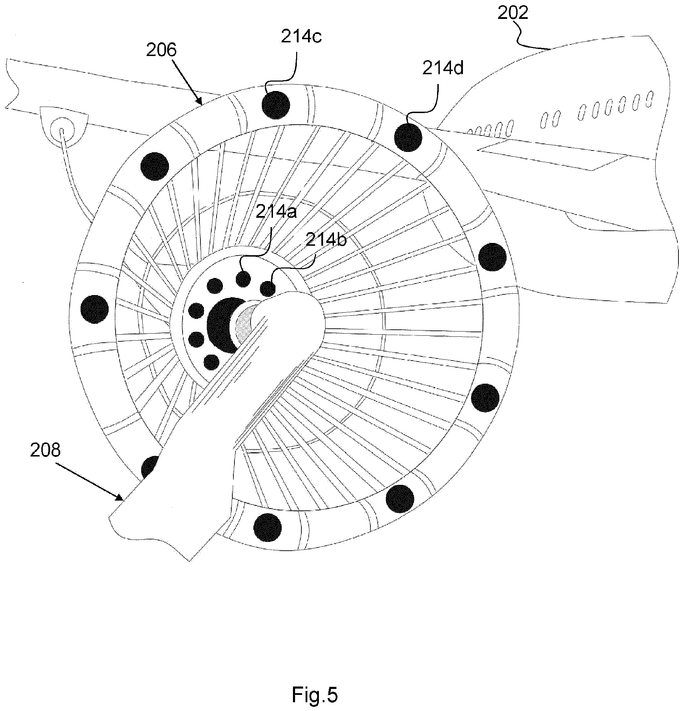

Figure 5 shows an alternative arrangement to Figure 3 wherein one or more optical transceivers 214a, 214b are arranged at the first end 218 of the frustoconical guide portion 216 and one or more optical transceivers 214c, 214d are located at the second end 220 of the frustoconical guide portion 216. Such an arrangement is advantageous in that a wider field of view may be achieved by the one or more optical transceivers 214 located at the second end 220 of the frustoconical guide portion to perform a first low rate data transfer between the first aircraft 202 and second aircraft 204 e.g. when the second aircraft 204 approaches the first aircraft 202 a hand shake process may take place to establish communication. Once the fuel receiving device 208 has locked with the fuel delivery device 206, a high rate data transfer takes place using the optical transceivers 214a 214b located on the first end 218 of the frustoconical guide portion 216.

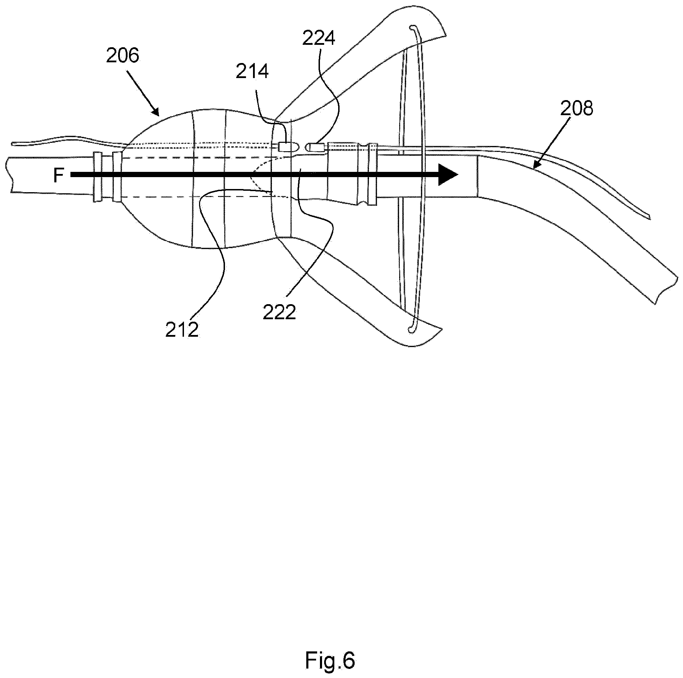

Figure 6 shows an example arrangement of a fuel receiving device 208, a probe fuel receiving device, comprising a fuel inlet 222 in engagement with the fuel delivery device 206 of Figure 2. Upon engagement, fuel may transfer from the fuel outlet 212 of the drogue 206 to a fuel inlet 222 of the probe 208 as indicated by the solid line arrow F. The fuel delivery device 206 comprises an optical transceiver 214, herein a first optical transceiver. In this arrangement, the fuel receiving device 208 also comprises an optical transceiver 224, herein referred to as a second optical transceiver to differentiate from the first optical transceiver. The fuel delivery device 206 and fuel receiving device 208 are configured to conduct optical wireless communication via the first and second optical transceivers 214 and 224, respectively. In another arrangement, the fuel receiving device 208 may only comprise an optical transmitter (not shown) or an optical receiver (not shown) as opposed to an optical transceiver such that communication between the first and second aircraft may only be unidirectional.

Different arrangements of the first optical transceiver 214 will now be described. Whilst only the first optical transceiver 214 is described, it is apparent that the following optional features may be applied equally to the second optical transceiver 224 of the fuel receiving device 208.

The first optical transceiver 214 may be configured to transmit and receive data via optical wireless communication comprising a wavelength in the visible light spectrum. Transmitting a wavelength in the visible light spectrum allows the fuel delivery device 206 to be more readily spotted by a second aircraft 204 in flight and allows for higher rates of data transfer by the optical transceiver 214. Data transfer rates up to 10Gb/s may be achieved using the visible light spectrum. In one example, the wavelength of transmission of the optical transceiver 214 may be in the range of from 600nm to 800nm, more preferably in the range of from 625nm to 750nm. That is to say, the optical transceiver 214 may transmit in the red light spectrum. Advantageously, illumination of the fuel delivery device 206 with red light tends to preserve night vision of an operator of the second aircraft and is particularly advantageous when the operator of the second aircraft is using night vision goggles (NVG's) when conducting air-to-air refuelling during night time operations.

Alternatively, the first optical transceiver 214 may be configured to transmit and receive data via optical wireless communication comprising a wavelength in the Infra-red (IR) spectrum. In one example. the wavelength of transmission of the optical transceiver 214 may be in the range of from 700nm to 1mm. Advantageously, both illumination of the fuel delivery device 206 and transmission of data in the IR spectrum tends to result in a more covert refuelling operation, especially during night operations, as the fuel delivery device 206 is not visibly illuminated to the naked eye. Furthermore, illumination of the fuel delivery device 206 using IR light tends to enable better visibility of the fuel delivery device 206 to the operator of the second aircraft 204 when using NVG's.

Alternatively, the first optical transceiver 214 may be configured to transmit and received data via optical wireless communication comprising a wavelength in the ultra-violet (UV) spectrum. In one example, the wavelength of transmission of the optical transceiver 214 may be in the range of from 10-400nm.

In one arrangement, the first optical transceiver 214 is configured to alternate between the visible light spectrum and IR spectrum when transmitting and receiving data via optical wireless communication. Such an arrangement allows the same first transceiver 214 to dynamically adapt to a changing environment, for example, the optical transceiver 214 may be configured to transmit in the visible light spectrum in daytime operations and change to the IR spectrum in night-time operations. This may advantageously preserve the night vision of an operator of the second aircraft during refuelling operations. Alternatively, the first optical transceiver 214 may be configured to change from the visible light spectrum to the IR spectrum in response to a changing threat situation, e.g. a low observable profile is required for a particular mission whereupon an IR illumination/transmission is selected.

In one arrangement, the first optical transceiver 214 is configured to transmit and receive data using frequency-division multiplexing and/or time-division multiplexing. Such an arrangement allows multiple data streams to be transmitted and received by a single optical transceiver 214 and/or higher data transfer rates to be achieved. In another arrangement, a plurality of first optical transceivers 214a 214 b may each be configured to transmit and receive data using frequency-division multiplexing and/or time-division multiplexing.

In one arrangement, data transfer between the first aircraft 102 and second aircraft 104 may be initiated by physical connection between the fuel delivery device 106 and the fuel receiving device 108. In another arrangement, data transfer may begin before physical connection between the fuel delivery device 106 and fuel receiving device 108. For example, a hand shake process may be conducted when the fuel receiving device 108 is within visual line of sight with the first optical transceiver 214 of the fuel delivery device 106 whereupon higher rates of data transfer are only activated upon physical connection between the fuel delivery device 206 and the fuel receiving device 208. In one arrangement, data transfer between the first aircraft 102 and second aircraft 104 may be severed by physical disconnect between the fuel delivery device 106 and fuel receiving device 108 or in response to a command to sever communication from the first or second aircraft.

The fuel delivery device 106 may be part of an aircraft as shown in Figure 1. The fuel receiving device 108 may be part of an aircraft. An aircraft may include one or more fuel delivery devices 106 and one more fuel receiving devices 108 simultaneously. i.e. the aircraft may be capable of refuelling and being refuelled in flight.

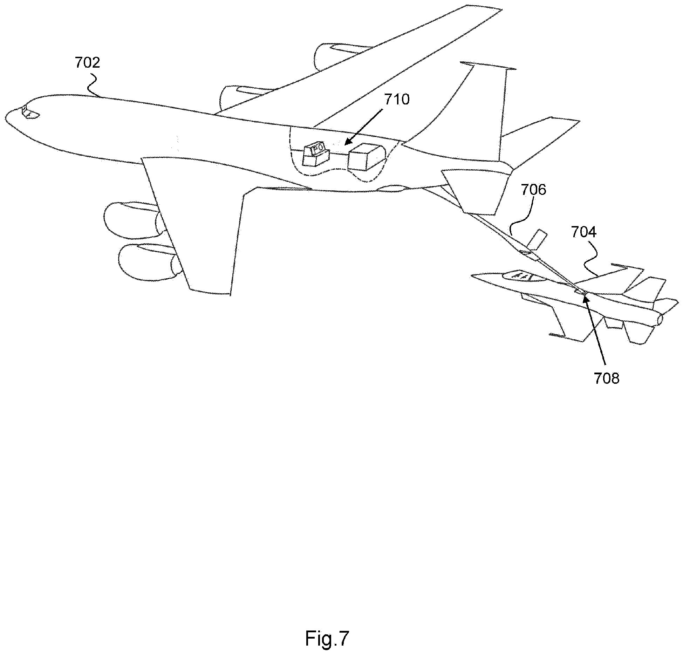

Figure 7 shows an alternative perspective view of a first aircraft 702 refuelling a second aircraft 704. In this arrangement, the first aircraft 702 has a fuel delivery device 706 in the form of a flying boom fuel delivery device and the second aircraft 704 has a fuel receiving device 708 in the form of a port. In this arrangement, the first aircraft 702 comprises a mission suite 710 in its fuselage for processing data as described in Figure 1. In this arrangement, the fuel receiving device 708 is located on the dorsal surface of the second aircraft 704. The flying boom fuel delivery device 707 comprises a first optical transceiver (not shown) located proximal to the fuel outlet (not shown) of the flying boom fuel delivery device 707.

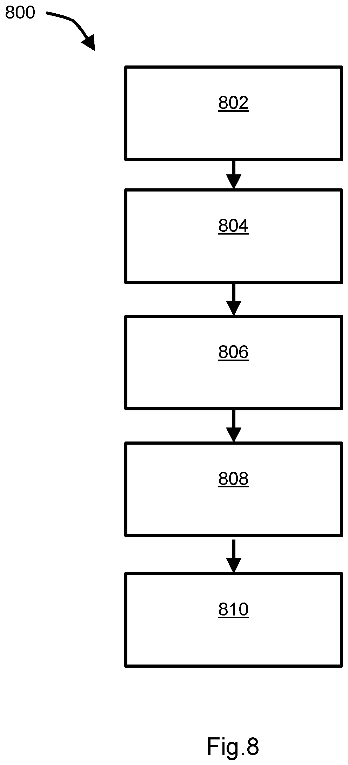

Figure 8 shows a method flowchart 800 of communicating between a first and second aircraft during air-to-air refuelling comprising the steps of:
802: providing a fuel delivery device as herein described;
804: providing a fuel receiving device as herein described;
806: illuminating the fuel delivery device using the first optical transceiver in order to provide a visual indication of the location of the fuel delivery device to the second aircraft;
808: coupling the fuel delivery device of the first aircraft to a fuel receiving device of the second aircraft in flight, wherein the fuel receiving device comprises a second optical transceiver; and,
810: communicating wirelessly between the first and second aircraft via the first optical transceiver of the fuel delivery device and the second optical transceiver of the fuel receiving device.

## Claims

1. A fuel delivery device (106) for air-to-air refuelling, the device comprising:
a fuel outlet (212); and
an optical transceiver (214), wherein the optical transceiver is configured to:
illuminate the fuel delivery device to provide visual indication to an aircraft receiving fuel; and,
transmit and receive data via optical wireless communication to the aircraft receiving fuel from the fuel delivery device.

2. The fuel delivery device according to claim 1 wherein the fuel delivery device is a drogue (206) comprising a frustoconical guide portion (216);
wherein the frustoconical guide portion comprises a first end (218) and a second end (220); and
wherein the second end has a greater diameter than the first end; and
wherein the fuel outlet is located at the first end of the frustoconical guide portion.

3. The fuel delivery device according to claim 2 wherein the optical transceiver is located at the first end of the frustoconical guide portion

4. The fuel delivery device according to claim 2 wherein the optical transceiver is located at the second end of the frustoconical guide portion.

5. The fuel delivery device according to claim 4 wherein the fuel delivery device comprises a plurality of optical transceivers (214a 214b), and wherein the plurality of optical transceivers are distributed around a circumference of the second end of the frustoconical guide portion.

6. The fuel delivery device according to any preceding claim wherein the optical transceiver(s) is configured to transmit and receive data wirelessly via electromagnetic waves in the visible light spectrum.

7. The fuel delivery device according to claim 6 wherein the wavelength in the visible light spectrum is in the range of from 600nm to 800nm.

8. The fuel delivery device according to any one of claims 1 to 5 wherein the optical transceiver is configured to transmit and receive data wirelessly via electromagnetic waves in the IR spectrum.

9. The fuel delivery device according to any preceding claim wherein the optical transceiver is configured to alternate between the visible light spectrum and IR spectrum when transmitting and receiving electromagnetic waves.

10. The fuel delivery device according to any preceding claim wherein the optical transceiver is configured to transmit and receive data using frequency-division multiplexing and/or time-division multiplexing.

11. The fuel delivery device according to any preceding claim wherein data transfer is initiated by a physical connection between the fuel delivery device and the aircraft receiving fuel.

12. A fuel receiving device (208) for air-to-air refuelling, the device comprising:
a fuel inlet (222); and
an optical transceiver (224);
wherein the optical transceiver is configured to transmit and receive data via optical wireless communication to an aircraft delivering fuel to the fuel inlet.

13. An aircraft (102) comprising the fuel delivery device according to any one of claims 1 to 11 and/or the fuel receiving device according to claim 12.

14. An aircraft communication system for air-to-air refuelling comprising:
a fuel delivery device (106) according to any one of claims 1 to 11 comprising a first optical transceiver (214); and
a fuel receiving device according to claim 12 comprising a second optical transceiver (224);
wherein the first optical transceiver is configured to transmit and receive data to and from the second optical transceiver so as to provide optical wireless communication between a first (102) and second aircraft (104) during air-to-air refuelling.

15. A method of communicating between a first (102) and second aircraft (104) during air-to-air refuelling comprising the steps of:
providing a fuel delivery device according to any one of claims 1 to 11 (802);
providing a fuel receiving device according to claim 12 (804);
illuminating the fuel delivery device using the first optical transceiver in order to provide a visual indication to a second aircraft (806);
coupling the fuel delivery device of the first aircraft to the fuel receiving device of the second aircraft in flight, wherein the fuel delivery device comprises a first optical transceiver and the fuel receiving device comprises a second optical transceiver (808); and,
communicating wirelessly between the first and second aircraft via the first optical transceiver of the fuel delivery device and the second optical transceiver of the fuel receiving device (810).
